# FASCICULE DE BREVET EUROPEEN

(11) **EP 0 807 117 B1**
(45) Date de publication et mention de la délivrance du brevet: **01.12.1999**
(21) Numéro de dépôt: 96902314.2
(22) Date de dépôt: 31.01.1996
(51) Int. Cl.: C07F 9/53, G21F 9/00

(54) **DERIVES DE CALIXARENES, LEUR PROCEDE DE PREPARATION ET LEUR UTILISATION POUR L'EXTRACTION DES ACTINIDES ET DES LANTHANIDES**
CALIXARENDERIVATE, VERFAHREN ZU DEREN HERSTELLUNG UND IHRE VERWENDUNG ZUR EXTRAKTION VON AKTINIDEN UND LANTHANIDEN
CALIXARENE DERIVATIVES, PREPARATION METHOD THEREFOR AND USE THEREOF FOR REMOVING ACTINIDES AND LANTHANIDES

(30) Priorité: 01.02.1995 FR 9501158
(43) Date de publication de la demande: 19.11.1997
(73) Titulaire: COMMISSARIAT A L'ENERGIE ATOMIQUE, 75015 Paris (FR)
(72) Inventeur: DOZOL, Jean-François, F-04660 Pierrevert (FR); ROUQUETTE, Hélène, F-04100 Manosque (FR); BÖHMER, Volker, D-55126 Mainz (DE); GRÜTTNER, Cordula, D-18273 Güstrow (DE); JAKOBI, Ralf, A., D-66954 Pirmasens (DE); KRAFT, Dagmar, D-64251 Gross Gerau (DE); VOGT, Walter, D-65207 Wiesbaden (DE)
(74) Mandataire: Des Termes, Monique
(86) Numéro de dépôt international: FR9600161
(87) Numéro de publication internationale: WO9623800

(56) Documents cités:
- WO-A-94/24138
- FR-A- 2 717 480
- US-A- 4 548 790
- CHEMICAL ABSTRACTS, vol. 114, no. 15, 15 Avril 1991 Columbus, Ohio, US; abstract no. 143712, KONDO Y ET AL: "Calixarene derivatives having phosphonic acid group" XP002003481 & JP,A,90 229 198 (KANEBO, LTD.;JAPAN) 11 Septembre 1990

## Description

La présente invention a pour objet de nouveaux dérivés de calixarènes, leur procédé de préparation et leur utilisation pour l'extraction des actinides et des lanthanides.

De façon plus précise elle concerne des calixarènes comportant un substituant phosphinoxydo acétamide qui présentent des propriétés intéressantes pour l'extraction des actinides et des lanthanides, notamment des actinides et lanthanides trivalents.

Ces nouveaux calixarènes sont donc utilisables pour l'extraction des actinides et des lanthanides présents dans des solutions acqueuses tels que les effluents aqueux provenant d'installations de retraitement de combustibles nucléaires usés ou les solutions de dissolution de combustibles nucléaires usés.

On a déjà envisagé d'utiliser des ligands macrocycliques tels que les calixarènes, pour extraire des métaux à partir de solutions aqueuses. Ainsi, le document US-A-4 477 377 décrit l'utilisation de calixarènes pour récupérer le césium à partir de solutions aqueuses et les documents WO 94/12502 et 94/24138 décrivent des calixarènes-couronnes utilisables pour l'extraction sélective du césium et des actinides. Dans ce dernier cas, les calixarènes ont une structure particulière car ils comportent plusieurs ponts qui donnent une conformation alternée 1,3 à la structure de base et leur confèrent à la fois les propriétés complexantes des éthers-couronnes et certaines propriétés des calixarènes (caractère lipophile, conformation...).

Le document US-A-4 548 190 illustre l'emploi de composés organiques de formule 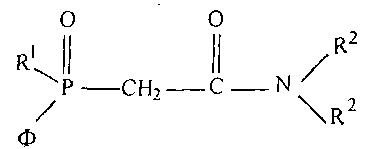 dans laquelle Φ représente le groupe phényle, R¹ est un groupe alkyle ou alcoxyalkyle, linéaire ou ramifié, de 6 à 12 atomes de carbone, et R² est un groupe alkyle de 3 à 6 atomes de carbone, par exemple le CMPO, pour la récupération d'actinides et de lanthanides à partir de solutions aqueuses.

La présente invention concerne de nouveaux dérivés de calixarènes qui, bien qu'ayant une plus grande mobilité, ont de bonnes propriétés d'extraction vis-a-vis des actinides et des lanthanides, grâce à la présence de substituants particuliers.

Selon l'invention, le calixarène répond à la formule : 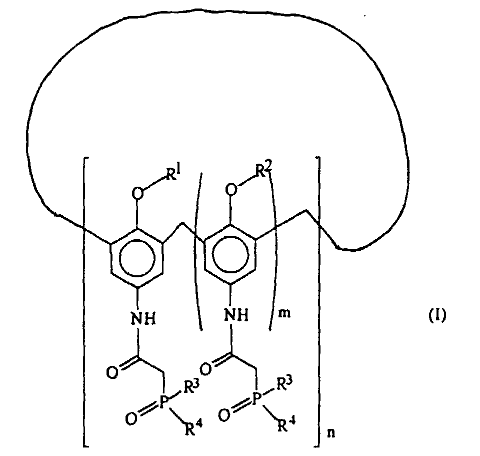 dans laquelle m est égal à 0 ou 1,
- n est un nombre entier allant de 2 à 8, avec 4 ≤ (m + 1) x n ≤ 8
- R¹ et R² qui peuvent être identiques ou différents, sont des groupes alkyle ou o-nitrophénoxyalkyle, et
- R³ et R⁴ qui peuvent être identiques ou différents, sont des groupes alkyle ou aryle.

Ainsi, les calixarènes de l'invention ne comportent aucun pont entre les unités benzéniques et ont de ce fait une structure moins rigide que celle des calixarènes-couronnes des documents WO 94/12502 et 94/24138. Dans ces nouveaux calixarènes, la présence des groupes phosphinoxydo acétamide qui sont fixés sur le bord supérieur de la cavité du macrocycle, confère au ligand une affinité très élevée pour les actinides et les lanthanides.

Dans la formule (I) donnée ci-dessus, R¹ et R² peuvent être des groupes alkyle ou o-nitrophénoxyalkyle, Les groupes alkyle peuvent être linéaires ou ramifiés et comportent de préférence de 1 à 18 atomes de carbone.

Dans cette formule, R³ et R⁴ peuvent être des groupes alkyle ou aryle. Les groupes alkyle peuvent être linéaires ou ramifiés et ont de préférence de 1 à 18 atomes de carbones. Les groupes aryle utilisables sont des groupes monovalents dérivés d'un noyau aromatique ou hétérocyclique par enlèvement d'un atome d'hydrogène à l'un des atomes de carbone du cycle. A titre d'exemple de tels groupes, on peut citer les groupes phényle, naphtyle, pyridyle, thiophényle et phényle substitué.

Selon un premier mode de réalisation de l'invention, les calixarènes répondent à la formule (I) avec m égal à 0. De tels calixarènes ont les mêmes substituants sur chaque bord de la cavité du macrocycle. Ils présentent de bonnes propriétés d'extraction vis-à-vis des lanthanides et des actinides trivalents.

Selon un second mode de réalisation de l'invention, le calixarène répond à la formule (I) donnée ci-dessus avec m égal à 1.

Dans ce cas tous les substituants situés sur le bord supérieur de la cavité du macrocycle sont identiques et confèrent un caractère lipophile au macrocycle. En revanche, les substituants se trouvant sur le bord inférieur de la cavité sont alternés, un groupe méthyle étant intercalé entre deux groupes alkyle

De tels calixarènes plus solubles, en particulier dans les nitrophényl alkyl éthers, sont intéressants pour l'extraction du plutonium tétravalent.

Les calixarènes de l'invention peuvent être préparés par un procédé comprenant les étapes suivantes :
a) nitration d'un O-alkyl calixarène de formule : 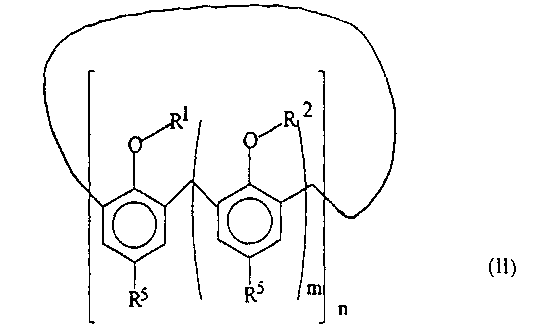 dans laquelle R¹, R², m et n ont les significations données ci-dessus et R⁵ est un atome d'hydrogène ou un groupe tert butyle, pour obtenir un dérivé nitré de formule : 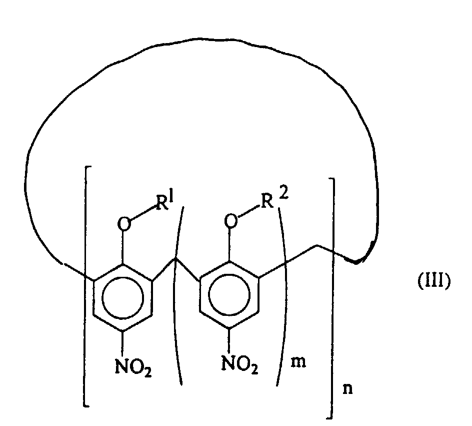
b) convertir le dérivé nitré de formule (III) en dérivé aminé de formule : 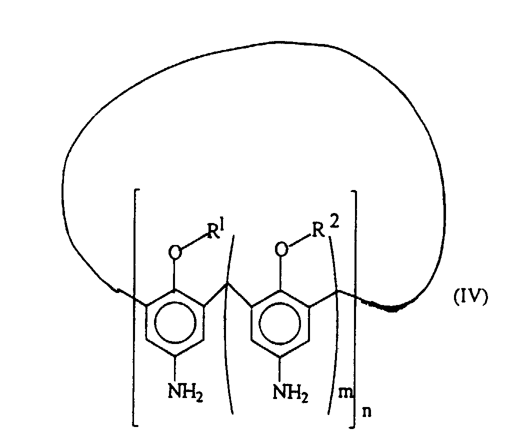 par hydrogénation catalytique,
c) faire réagir le dérivé aminé de formule (IV) avec un phosphinoxydo acétate de formule : 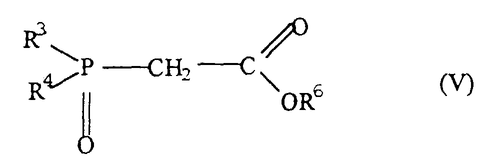 dans laquelle R³ et R⁴ ont les significations données ci-dessus et R⁶ représente un groupe tel que le p nitrophényle ou le 2,4 dinitrophényle.

Pour mettre en oeuvre ce procédé, on part des O-alkylcalixarènes correspondants de formule (II) que l'on soumet tout d'abord à une nitration pour remplacer R⁵ par NO₂, suivie d'une réduction du groupe nitro en groupe amino et d'une réaction du groupe amino avec un phosphinoxydoacétate approprié de formule (V).

Le phosphinoxydoacétate de formule (V) utilisé dans la dernière étape peut être préparé à partir du phosphinite de méthyle correspondant de formule : 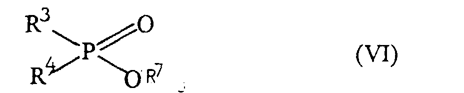 où R³ et R⁴ ont les significations données ci-dessus et R⁷ est un groupe alkyle possédant 1 à 4 carbones, par réaction de celui-ci avec du bromoacétate d'éthyle, suivie d'une hydrolyse et de l'estérification de l'acide obtenu avec du nitrophénol.

Dans le cas où le calixarène correspond à la formule (I) avec m égal à 1, le produit de départ peut être obtenu en préparant tout d'abord, un 1,3 - di- ou 1,3,5-tri ou 1,3,5,7-tétra-O-alkylcalixarène à partir du calixarène correspondant par réaction avec du carbonate de potassium et du bromure d'alkyle, suivie d'une méthylation de l'alkyl-calixarène obtenu par réaction de celui-ci avec de l'iodure de méthyle.

Les calixarènes de l'invention peuvent être utilisés pour extraire au moins un métal choisi parmi les actinides et les lanthanides présents dans une solution aqueuse, notamment une solution acide telle que les solutions de dissolution et les effluents aqueux provenant d'installations de retraitement de combustibles nucléaires usés.

Pour réaliser cette extraction, on met en contact une première solution aqueuse contenant le ou les métaux à extraire avec une phase liquide immiscible comprenant au moins un calixarène répondant à la formule (I) donnée ci-dessus, puis on réextrait dans une deuxième solution aqueuse contenant un complexant du métal ou des métaux extraits, le ou les métaux transférés dans un premier temps dans la phase immiscible.

La phase immiscible peut être une phase solide ou liquide. Dans le cas d'une phase solide, celle-ci peut être imprégnée d'un ou plusieurs calixarènes de l'invention, à l'état pur ou en solution dans un solvant approprié. On peut aussi utiliser une phase solide sur laquelle est greffé le(s) calixarène(s) de l'invention.

Selon un premier mode de réalisation de l'extraction, on utilise une phase liquide. Cette phase liquide immiscible est généralement constituée par une solution du ou des calixarènes de l'invention dans un solvant organique approprié.

Avec cette phase liquide, on peut réextraire les cations (métaux) en mettant en contact cette phase organique avec une deuxième phase liquide dans laquelle on récupère sélectivement le ou les métaux. La phase organique peut être alors réutilisée.

Selon un second mode de réalisation de l'extraction, on immobilise la phase organique dans un support solide tel que le polypropylène. On peut ainsi transférer les actinides et eux seuls de la première phase aqueuse dans une seconde phase aqueuse : (Membrane liquide supportée).

Dans ce second mode de mise en oeuvre, la phase immiscible est constituée par une membrane liquide comprenant le (les) calixarènes, l'une des faces de la membrane étant en contact avec la première solution aqueuse contenant les métaux à extraire et l'autre face étant en contact avec la deuxième solution aqueuse de réextraction . La membrane liquide peut être pr exemple une membrane liquide supportée constituée par une membrane microporeuse jouant le rôle de support, dont les pores sont remplis de calixarène(s) en solution dans un solvant organique approprié.

Cette membrane microporeuse peut être réalisée en polupropylène, en fluorure de polyvinylidène ou en polytétrafluoréthylène, et elle peut servir de séparation entre un premier compartiment dans lequel se trouve la première solution aqueuse à traiter et un deuxième compartiment dans lequel se trouve la seconde solution aqueuse de réextraction.

Pour obtenir une bonne extraction avec les membranes liquides supportées, il est avantageux d'utiliser des membranes ayant une faible épaisseur, une grande porosité et un petit diamètre de pores. Ces membranes peuvent être utilisée sous la forme de modules tels que les modules d'ultra ou de microfiltration à membranes planes ou à fibres creuses, qui permettent de traiter des débits importants de fluide.

Selon l'invention, la seconde solution aqueuse de réextraction est une solution aqueuse de complexant. Le complexant peut être un acide organique ou un sel d'acide organique tel que l'acide méthylène diphophonique, l'acide oxalique, l'acide citrique, les oxalates et les citrates. L'emploi de telles solutions permet d'obtenir la réextraction avec des rendements élevés.

Pour mettre en oeuvre le procédé de l'invention avec une phase liquide, on peut effectuer la mise en contact de la solution aqueuse avec cette phase liquide immiscible dans des installations classiques d'extraction liquide-liquide telles que des mélangeurs-décanteurs, des extracteurs centrifuges, des colonnes pulsées etc., mais aussi au moyen des membranes liquides supportées.

Généralement pour former la phase liquide immiscible, on dissout le calixarène dans un solvant approprié.

A titre d'exemple de solvants utilisables, on peut citer les alkyl benzènes et les nitrophényl alkyl éthers.

De préférence, on utilise comme solvant un éther tel que l'ortho-nitrophényl hexyl éther.

La concentration en calixarène de la phase liquide immiscible dépend en particulier du solvant utilisé. On peut utiliser des concentrations allant de 10⁻⁴ à 5,10⁻² mol/l par exemple une concentration de 10⁻³ mol/l.

Après extraction, on peut récupérer les actinides et les lanthanides présents dans la phase liquide immiscible, dans une deuxième solution aqueuse contenant un complexant des métaux extraits tels que ceux décrits ci-dessus.

D'autres caractéristiques et avantages de l'invention apparaîtront mieux à la lecture des exemples suivants donnés bien entendu à titre illustratif et non limitatif, en référence au dessin annexé, sur lequel :

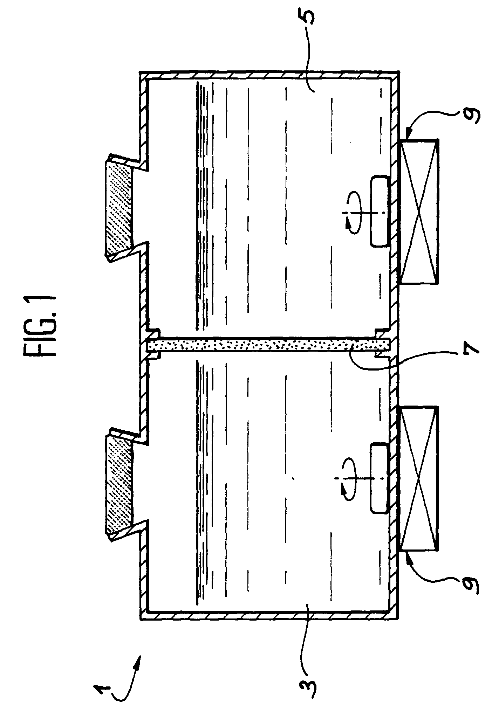

- la figure 1 représente de façon schématique un dispositif d'extraction utilisant une membrane liquide supportée.

### Exemple 1 : Préparation du 25, 26, 27,28 tétradodécyloxy-tétra-5, 11,17,23-(diphényl phosphinoxydo acétamido) calix[4]arène (Composé n°1).

Ce composé répond à la formule (I) avec m = 0, n = 4, R¹ = C₁₂H₂₅, et R³= R⁴ = phényle.

### 1) Préparation du tétra-O-dodécyl-tétra-p-t-butyl-calix[4]arène.

On soumet à une agitation une suspension de 7,78 g (12 mmol) de tétra-p-t-butylcalix[4]arène et de 15 g de NaH (à 60 % dans l'huile) dans 400 ml de diméthylformamide (DMF) pendant 1 à 1,5 heure sous argon. On ajoute ensuite 35,89 g (34,5 ml 144 mmol) de bromure de dodécyle et on poursuit l'agitation pendant 5 jours à la température ambiante. Après destruction de l'excès de NaH par addition de 20 à 50 ml d'eau avec précaution, on décante le liquide et on lave le précipité collant dans un flacon plusieurs fois avec de petites parties aliquotes d'éther de pétrole. Le produit brut est réparti entre 300 ml de chloroforme et 300 ml d'acide chlorhydrique à 15 %. On lave deux fois la couche organique avec de la saumure, on la sèche sur Na₂SO₄ anhydre et on élimine le solvant sous vide. On dissout le résidu dans 100 ml de chloroforme. Après addition de 700 ml d'éthanol et stockage dans un réfrigérateur pendant plusieurs jours on obtient 7,9 à 11,9 g d'un précipité du produit pratiquement pur (rendement de 50 à 75 %). On répète cette opération plusieurs fois pour atteindre le degré de pureté souhaité.

Les caractéristiques du produit obtenu sont les suivantes :
¹H NMR (200 MHz, CDCl₃) : 6,75 (s, ArH, 8 H) 4,45 (d, J = 13,8 Hz, ArCH₂Ar, 4 H), 3,61 (t, J = 6,8 Hz, OCH₂, 8 H) 3,25 (d, J = 13,8 Hz, ArCH₂Ar, 4 H), 1,89 (m, OCH₂CH₂,8 H), 1,42 - 1,19 (br m autres CH₂ de la chaîne alkyle, 72 H), 1,05 (s, C(CH₃)₃, 36 H), 0,89 (t, J = 6,4 Hz, CH₃, 12 H).
¹³C NMR (50 MHz, CDCl₃) : 153,8 ; 144,1 ; 133,9 ; 124,9 (Cₐᵣ), 75,5 (OCH₂), 33,8 - 29,4 (quelques signaux recouverts partiellement dus à ArCH₂Ar, C(CH₃)₃, C(CH₃)₃ et à la chaîne aliphatique) ; 26,4 ; 22,7 ; 14, 1 (trois derniers C de la chaîne).
Analyse élémentaire : calculée pour C₉₂ H₁₅₂O₄ (1322,2) : C 83,57 %, H 11,59 % ; trouvée C 83,19 %, H 11, 34 %
FD-MS : m/z-1322,7.
Point de fusion F = 76-78°C.

### 2) Préparation du tétra-O-dodécyl tétra nitro calix[4]arène.

On dissout 9,26 g (7mmol) du tétra-O-dodécyl-tétra-t-butyl-calix[4]arène obtenu précédemment dans 500 ml de chlorure de méthylène sec à la température ambiante et on mélange avec 80 ml d'acide acétique glacial. On ajoute ensuite goutte à goutte 24 ml d'acide nitrique à 100 % sur une période de 20 à 30 min. sous agitation vigoureuse. Après 1 à 4 heures, lorsque la couleur de la solution change du violet foncé au jaune orange, on ajoute 250 ml d'eau et on poursuit l'agitation pendant 30 min. supplémentaires. On sépare la couche organique, on la neutralise avec une solution de carbonate de sodium diluée, on lave avec de l'eau salée, puis on sèche sur Na₂SO₄ anhydre, on évapore sous vide et on dissout le résidu dans 30 à 70 ml de chloroforme. On ajoute précautionneusement 500 à 600 ml de méthanol et on obtient un précipité de produit brut sous la forme d'un solide pratiquement incolore. On le purifie par recristallisation à partir de n-heptane. On obtient ainsi 7,60 g du produit (rendement de 85 %).

Les caractéristiques de ce produit sont les suivantes :
¹H NMR (200 MHz, CDCl₃) : 7,55 (s, ArH, 8 H) 4,48 (d, J = 13,8 Hz, ArCH₂Ar, 4 H), 3,95 (t, J = 6,8 Hz, OCH₂, 8 H), 3,37 (d, J = 13, 8 Hz, ArCH₂Ar, 4 H), 1,89 (m, OCH₂CH₂, 8 H), 1,42 - 1,19 (br m, autres CH₂ de la chaîne alkyle, 72 H), 0,89 (t, J = 6,4 Hz, CH₃, 12 H).
¹³C NMR (50 MHz, CDCl₃) : 161,6 ; 142,8 ; 135,4 ; 123,9 (Cₐᵣ), 76,4 (OCH₂), 31,9 - 29,4 (quelques signaux partiellement recouverts dus à ArCH₂Ar et à la chaîne aliphatique), 26,1, 22,6, 14,05 (trois derniers C de la chaîne).
Analyse élémentaire : Calculée pour C₇₆H₁₁₆O₁₂N₄(1277,8) : C 71,44 %, H 9,15 %, N 4, 38 % ; trouvée C 71,29 %, H 8,97 %, N 4,19%.
FD-MS: m/z = 1277.0; F : 117-188°C.

### 3) Préparation du tétra-O-dodécyl tétra aminocalix[4]arène.

On dissout 6,39 g (5 mmol) du tétra-O-dodécyl tétra nitrocalix[4]arène obtenu en 2) dans 300 ml de toluène chaud et on hydrogène sous pression atmosphérique en présence de nickel de Raney à 60°C. Lorsque la réaction est terminée, on élimine le catalyseur par filtration, on lave avec du toluène chaud et on évapore la solution de toluène sous vide. On recristallise le résidu à partir d'isopropanol. On obtient ainsi 4,63 g de composé (rendement de 80 %).

Les caractéristiques de ce composé sont les suivantes :
¹H-NMR (200 MHz, CDCl₃) : 6,05 (s, ArH, 8 H ), 4,29 (d, J = 13,1 Hz) ArCH₂Ar, 4 H), 3, 74 (t, J = 7,2 Hz, OCH₂, 8H), 2,90 (d, J = 13,1 Hz, ArCH₂Ar, 4 H), 2,75 (br s, NH₂, 8 H), 1,84 (m, OCH₂CH₂, 8 H), 1,26 (br m, CH₂ des chaînes alkyle, le nombre de H dépend de la longueur), 0,87 (t, J = 6,5 Hz, CH₃, 12 H).
¹³C-NMR (50 MHz, CDCl₃) : 150,0 ; 140,3 ; 135,6 ; 115,7 (Cₐᵣ), 75,1 (OCH₂), 32,0 - 29,3 (quelques signaux partiellement recouverts dus à ArCH₂Ar et à la chaîne aliphatique) ; 26,4 ; 22,7; 14,1 (trois derniers C de la chaîne)
Analyse élémentaire : Calculée pour C₇₆H₁₂₄O₄N₄ (1157,9): C 78,84 %, H 10,79 %, N 4,84 % ; trouvée C 78,81 %, H 10,79 %, N 4,84 %
FD-MS : m/z = 1157,7; F :163°C.

### 4) Préparation du diphényl phosphinoxydo acétate de nitrophényle.

### a) Préparation de l'acide diphényl phosphinoxydo acétique.

On mélange 43 g ( 0,2 mol) de diphényl phosphinite de méthyle et 25 ml de bromoacétate d'éthyle dans un flacon ouvert de 500 ml, à la température ambiante. Après quelques secondes, le mélange s'échauffe rapidement et le bromure de méthyle est éliminé. Lorsque la réaction violente a cessé, on chauffe la solution à 100°C pendant 30 min. On ajoute le produit brut à une solution de 40 g de NaOH dans 300 ml d'un mélange eau-éthanol (1/1 en volume) et on le maintient sous argon à 70°C pendant trois jours. On évapore ensuite l'éthanol, on ajoute 200 ml d'eau et on extrait cette solution avec 100 ml de chloroforme pour éliminer les produis de réarrangement Arbuzov non désirés. On acidifie la couche aqueuse à un pH de 1, et on extrait l'acide diphényl phosphinoxydo acétique brut avec du chloroforme (trois fois 200 ml). Les extraits de chloroforme combinés sont lavés avec de l'eau salée, séchés sur Na₂SO₄ et évaporés sous vide. Si l'acide apparait comme une huile, on accélère la cristallisation par traitement de l'huile avec du benzène. On obtient ainsi l'acide avec un rendement de 80 à 90 %.

### b) Préparation du diphénylphosphinoxydo acétate de nitrophényle.

On dissout 2,60 g (10 mmol) de l'acide diphénylphosphinoxydo acétique obtenu en a) et 1,67 g de p-nitrophénol (20 % d'excès) dans 50 ml de chloroforme chaud, et on ajoute 2,06 g de dicyclohexyl carbodiimide (DCC). On agite le mélange pendant une nuit à la température ambiante. On élimine par filtration la dicyclohexyl urée formée (DCU). On précipite la plupart du DCU résiduel par addition de 75 à 100 ml d'acétate d'éthyle et stockage dans le réfrigérateur pendant 30 à 60 min. Après une seconde filtration, on évapore le filtrat à siccité et on recristallise le résidu à partir d'acétate d'éthyle. L'addition d'heptane à la liqueur mère permet d'obtenir à nouveau le produit. Le rendement total est d'environ 80 % de produit suffisamment pur pour la synthèse qui va suivre.

Les caractéristiques de ce produit sont les suivantes :
¹H NMR (200 MHz, CDCl₃) : 8,16 (d, J = 9,2 Hz, NO₂ArH), 2 H),. 7,89-7,31 (m autre ArH, 10 H), 6,94 (d, J = 9,2 Hz, NO₂ArH, 2 H), 3,75 (d, J = 14,5 Hz, CH₂PO, 2 H).

### 5) Préparation du tétra-O-dodécyl tétrakis (diphényl phosphinoxydo acétamido) calix[4]arène. (Composé n°1)

On soumet à une agitation dans 50 ml de chloroforme sec et exempt d'éthanol 289 mg (0,25 mmol) du tétra-O-dodécyl tétra-p-amino calix[4]arène obtenu en 3) et 700 mg de diphényl phosphinoxydo acétate de nitrophényle obtenu en 4), à 45°C pendant trois jours. Après refroidissement à la température ambiante, on ajoute 50 ml d'eau et quelques ml d'une solution concentrée d'hydroxyde de potassium. On agite le mélange pendant trois à quatre heures, puis on sépare la couche organique et on la lave successivement avec une solution à 5 % de carbonate de sodium, de l'eau et de l'eau salée. Après séchage sur Na₂SO₄ anhydre, on élimine le solvant sous vide et on recristallise le résidu dans du méthanol. On obtient ainsi 372 mg du composé n°1 (rendement de 70 %).

Les caractéristiques de ce composé sont les suivantes :
¹H NMR (200 MHz, CDCl₃) : 8,96 (s, NH, 4H), 7,75-7,37 (m, P-ArH, 40 H), 6,56 (s, Calix-ArH, 8 H), 4,29 (d, J = 13,2 Hz, ArCH₂,Ar, 4 H), 3,74 (t, J = 7,2 Hz, OCH₂, 8 H), 3,42 (d, J = 13,6 Hz, POCH₂CO, 8 H), 2,99 (d, J = 13,2 Hz, ArCH₂,Ar, 4 H) ; 1,81 (m, OCH₂CH₂, 8 H), 1,26 (br m, CH₂ des chaînes alkyles, 72 H), 0,87 (t, J = 6,5 Hz, CH₃, 12 H). L'eau associée provenant évidemment du solvant apparaît comme un singulet large dans la région d'environ 2 ppm.
¹³C NMR ( 50 MHz, CDCl₃) : 163,1 (d, J = 4,6 Hz, CONH), 154,0, 135,0-128,7, 122,1 (partiellement recouvert C_{Ar}), 75,3 (OCH2), 3,97 (d, J = 59,2 Hz, CH₂PO), 32,0-29,5 (quelques signaux partiellement recouverts dus à ArCH₂ Ar et à la chaîne aliphalique), 26,1, 22,6, 14,0 ( trois derniers C de la chaîne).
FAB-MS : 2129,2.

Le point de fusion n'est pas net, l'échantillon fond après ramollissement dans un intervalle de température d'environ 150-180°C avec décomposition.

### Exemples 2 à 5

Dans ces exemples, on suit le même mode opératoire que dans l'exemple 1 pour préparer les composés 2 à 5 du tableau 1. Les caractéristiques des composés tétramino intermédiaires sont les suivantes :
Composé intermédiaire du composé n°2.
   - FD-MS:m/z = 1045,0; F = 178°C
   - Analyse élémentaire calculée pour C₆₈H₁₀₈O₄N₄ C78,11 %, H 10,41 %, N 5,36 % ; trouvée 78,24 %, H 10,29 %, N 5,36 %.
Composé intermédiaire du composé n°3.
   FD-MS : m/z = 1269,1; F : 148°C.
   Analyse élémentaire calculée pour C₈₄H₁₄₀O₄N₄ : C79,44 %, H 11,11 %, N 4,41 % ; trouvée : C 79,38 %, H 11,12 %, N 4,40 %.
Composé intermédiaire du composé N°4;
   FD-MS : m/z = 1382,6
   F : 140°C
   Analyse élémentaire calulée pour C₉₂H₁₅₆O₄N₄ : C 79,94 %, H 11,38 %, N 4,05 % ; trouvée C 78,53 %; H 11,26 %, N 4,05 %.
Composé intermédiaire du composé N°5
   FD-MS : m/z = 1495,9
   F : 135°C
   Analyse élémentaire calculée pour C₁₀₀H₁₇₂O₄N₄ : C 80,37 %, H 11,60 %, N 3,75 % ; trouvée C 78,29 %, H 11,37 %, N 3,70 %

Les caractéristiques des composés n° 2 à 5 sont les suivantes :

### Caractéristiques du composé n°2 : Tétra-O-décyl tétrakis (diphényl phosphinoxido-acétamido)calix[4]rène

¹H NMR (200 MHz, CDCl₃) : 8,96 (s, NH, 4H), 7,75-7,37 (m, P-ArH, 40 H), 6,56 (s. Calix-ArH, 8H, 4,29 (d, J = 6 13,2 Hz, ArCH₂Ar, 4 H), 3,74 (t, J = 7,2 Jz, OCH₂, 8H), 3,42 (d, J = 13, 6 Hz, POCH₂CO, 8H), 2,99 (d, J = 13,2 Hz) ArCH₂Ar, 4 H), 1,81 (m, OCH₂CH₂, 8 H), 1,26 (br m, CH₂ des chaînes alkyle, 56 H); 0,87 (t, J = 6,5 Hz, CH₂, 12 H). L'eau associée provenant évidemment du solvant apparaît comme un singulet large dans la région à environ 2 ppm.
¹³C NMR (50 MHz, CDCl3) : 163,1 (d, J = 4,6 Hz, CONH), 154,0, 135,0-128,7, 122,1 (partiellement recouvert CAr), 75,3 (OCH₂), 39,7 (d, J = 59,2 Hz, CH₂PO), 32,0 - 29,5 (quelques signaux partiellement recouverts dus à ArCH₂Ar et à la chaîne aliphatique), 76,1, 22,6, 14,0 (trois derniers C de la chaîne).
FAB-MS : 2016,8 (calculée 2014,5).

Le point de fusion n'est pas net, l'échantillon fond après ramollissement dans un intervalle de température d'environ 150 à 180°C avec décomposition.

### Caractéristiques du composé n°3 :Tétra-O-tétradécyl tétrakis(diphényl-phosphinoxidoacétamido)calix[4]arène

¹H NMR (200MHz, CDCl₃) : 8,96 (s, NH, 4H), 7,75-7,37 (m, P-ArH, 40 H), 6,56 (s, Calix-ArH, 8H), 4,29 (d, J = 13,2 Hz, ArCH₂Ar, 4H), 3,74 (t, J = 7,2 Hz, OCH₂, 8H), 3,42 (d, J = 13,6 Hz, POCH₂CO, 8H) 2,99 (d, J = 13,2 Hz, ArCH₂Ar, 4H), 1,81 (m, OCH₂CH₂, 8H), 1,26 (br m, CH₂ des chaînes alkyle, 88 H); 0,87 (t, J = 6,5 Hz, CH₃, 12H). L'eau associée (provenant évidemment du solfant) apparaît comme un singulet large dans la région à environ 2 ppm.
¹³C NMR (50 MHz, CDCl₃) : 163,1 (d, J = 4,6 Hz, CONH), 154,0, 135,0-128,7, 122,1 (partiellement recouvert, C_{Ar}), 75,3 (OCH₂), 39,7 (d, J = 59,2 Hz, CH₂PO), 32,0-29,5 (quelques signaux partiellement recouverts dus à ArCH₂Ar et la chaîne aliphatique) 26,1, 22,6, 14,0 (trois dernirs C de la chaîne)
FAB-MS 2241,5 (calculée 2238,9).

Le point de fusion n'est pas net, l'échantillon fond après ramollissement dans un intervalle de température d'environ 150-180°C avec décomposition.

### Caractéristiques du composé n°4 : Tétra O hexadécyl tétrakis(diphénylphospinaxidoacétamido)calix[4]arène

¹H NMR (200 MHz, CDCl₃, 8,96 (s, NH, 4H), 7,75-7,37 (m, PArH, 40H), 6,56 (s, Calix-ArH, 8H), 4,29 (d,J=13,2 Hz, ArCH₂Ar, 4H), 3,74 (t, J = 7,2 Hz, OCH₂, 8H), 3,42 (d, J = 13,6 Hz, POCH₂CO, 8H), 2,99 (d, J =13,2 Hz, ArCH₂Ar, 4H), 1,81 (m, OCH₂CH₂, 8H), 1,26 (br m, CH₂ des chaînes alkyle, 104 H); 0,87 (t, J= 6,5 Hz,CH₃, 12 H). L'eau associée (provenant évidemment du solvant) apparaît comme un singulet large dans la région à environ 2 ppm.
¹³C NMR (50 MHz, CDCl₃); 163,1 (d, J=4,6 Hz, CONH), 154,0, 135,0-128,7, 122,1 (partiellement recouvert, C_{Ar}), 75,3 (OCH₂), 39,7 (d, J = 59,2 Hz, CH₂PO), 32,0-29,5 (quelques signaux partiellement recouverts dus à ArCH₂Ar et à la chaîne aliphatique), 26,1, 22,6, 14,0 (trois derniers C de la chaîne).
FAB-MS; 2353,9 (ca!culée 2351,1).

Le point de fusion n'est pas net, l'échantillon fond après ramollissement dans un intervalle de température d'environ 150 à 180°C avec décomposition.

### Caractéristiques du composé n°5 : Tétra-O-octadécyl tétrakis(diphénylphosphinoxidoacétamido)calix[4]arène

¹H NMR (200 MHz, CDCl₃): 8,96 (s, NH, 4H), 7,75-7,37 (m, P-ArH, 40 H), 6,56 (s, Calix-ArH, 8H), 4,29 (d, J = 13,2 Hz, ArCH₂Ar, 4H), 3,74 (t, J = 7,2 Hz, OCH₂, 8H), 3,42 (d, J = 13,6 Hz, POCH₂CO, 8H), 2,99 (d, J = 13,2 Hz, ArCH₂Ar, 4H), 181 (m, OCH₂CH₂, 8H), 1,26 (br m, CH₂ des chaînes alkyle 120 H); 0,87 (t, J = 6,5 Hz, CH₃, 12 H). L'eau associée (provenant évidemment du solvant) apparaît comme un singulet large dans la région à environ 2 ppm.
¹³C NMR (50 MHz, CDCl₃); 163,1 (d, J = 4,6 Hz, CONH), 154,0, 135,0-128,7, 122,1 (partiellement recouvert, C_{Ar}), 75,3 (OCH₂), 39,7 (d, J = 59,2 Hz, CH₂PO), 32,0 - 29,5 (quelques signaux partiellement recouverts dus à ArCH₂Ar et à la chaîne aliphatique), 26,1, 22,6, 14,0 (trois derniers C de la chaîne).
FAB-MS:2466,2 (calculée 2463,4).

Le point de fusion n'est pas net, l'échantillon fond après ramollissement dans un intervalle de température d'environ 150 à 180°C avec décomposition.

### Exemple 6 : Préparation du 25, 27 didécyloxy-26,28-dimétoxy-5,11,17,23-(diphénylphosphinoxydoacétamido) calix[4]arène (composé n°6).

Le composé répond à la formule (I) avec m = 1, n = 2, R¹ = décyle R² = méthyle, et R³= R⁴ = phényle
1) : Préparation du 25, 27 didécyloxy calix[4]arène.
   On porte au reflux pendant 24 heures un mélange de 13,5 mmol (10 g de calix[4]arène), 15 mmol (2,19) de K₂CO₃ et 27,5 mmol de bromure de décyle dans 150 ml d'acétonitrile. Après évaporation du solvant, on dissout le résidu dans du chloroforme, on le lave avec HCI 1N (2 fois 30 ml), puis avec de l'eau salée. On sèche la couche organique sur Na₂SO₄ anhydre et on élimine le solvant sous vide. On recristallise le résidu à partir de chloroforme/méthanol. On obtient le dérivé alkylé avec un rendement de 70 à 85 %.
2) Préparation du 25, 27 didécyloxy-26,28-diméthoxy calix[4]arène.
   On porte au reflux 6 mmol du produit obtenu en 1) et 0,6 mol de NaH dans un mélange de tétrahydrofurane/diiméthyl formamide (DMF) avec un rapport 5/1 pendant 30 min. On ajoute alors goutte à goutte à la température ambiante, 0,6 mol d'iodure de méthyle. On agite le mélange pendant une nuit à 80°C, puis on le traite précautionneusement avec de l'eau pour détruire le NaH qui n'a pas réagi. On élimine les solvants sous vide, on reprend le résidu dans du chloroforme et on le lave à l'eau. On sépare la couche organique, on la sèche sur MgSO₄ et la filtre. Après évaporation du solvant, on reprend le produit brut dans quelques ml de chloroforme et on le filtre sur silice avec du chloroforme. Le produit est obtenu sous la forme d'une huile visqueuse claire avec un rendement de 79 à 96 %. Il est suffisamment pur pour la réalisation des étapes suivantes.
3) Préparation du 25, 27-didécyloxy-26,28-diméthoxy
   5,11,17,23 nitro calix[4]arène.
   Pour préparer ce composé, on suit le même mode opératoire que dans l'exemple 1.2) en partant du produit obtenu dans l'étape précédente.
4) Préparation du 25, 27-didécyloxy 26,28-dimetoxy-5,11,17, 23-tétra amino calix [4]arène.
   Pour cette préparation, on suit le même mode opératoire que dans l'exemple 1.3) à partir du produit obtenu précédemment.
5) Préparation du composé numéro 6.
   Pour cette préparation, on suit le même mode opératoire que dans l'exemple 1.5).
   Les caractéristiques du composé obtenu sont les suivantes :
   Di-O-décyl di O méthyltétrakis(diphénylphosphinoxidoacétamido)calix[4]arène.
   En raison de la flexibilité conformationnelle plus élevée, le spectre NMR est plus compliqué que le spectre des composés avec 4 résidus 0 alkyle identiques.
   ¹H NMR (200 MHz, CDCl₃): 9,48, 9,32, 9,08 (3s, NH ensemble 4H), 7,95-7,27 (m, P-ArH, 40 H), 6,78, 6,07, 5,95 (3s, Calix-ArH, ensemble 8H), 4,24-2,77 (ArCH₂Ar, OCH₂, OCH₃, POCH₂CO, 26 II), 1,97-0,83 (br m, chaînes alkyle, 38 H).
   FAB-MS :1763,2 (calculée 1761,9).

   Le point de fusion n'est pas net, l'échantillon fond après ramollissement dans un intervalle de température d'environ 150 à 180°C avec décomposition.
   Le tableau 1 illustre les composés 1 à 6 préparés dans les exemples 1 à 6, ainsi que les composés 7 à 10 qui sont préparés d'une manière analogue.

### Exemples 7 à 16:

Dans ces exemples, on évalue l'efficacité des calixarènes du tableau 1 pour extraire le plutonium, le neptunium et l'américium ainsi que l'europium (simulant l'ensemble des lanthanides trivalents) d'une solution aqueuse contenant un de ces éléments.

² La composition de la solution aqueuse est la suivante :
HNO₃ : 1 mol/l
NaNO₃ : 4mol/l
pH : ≈ 0
Pu : 0,6 mg/l
Am : 0,02 mg/l
Np : 200 mg/l
Eu : ≤ 0,001 mg/l

Dans ces exemples, on met en contact 3ml de la solution aqueuse avec 3ml d'une solution organique constituée par du nitrophényloctyléther contenant 0,001 ou 0,0001 mol/l du calixarène utilisé. On effectue la mise en contact dans un tube en polypropylène de 20ml que l'on soumet à une agitation. Après 1h de mise en contact, on laisse décanter les deux phases et on compte l'activité de chaque phase par scintillation liquide ou par spectrométries α et γ.

On détermine alors le coefficient de distribution D qui correspond au rapport de l'activité de l'actinide dans la phase organique sur l'activité de l'actinide dans la phaqe aqueuse.

Les résultats obtenus sont donnés dans le tableau 2.

Dans ce tableau, on a donné également à titre comparatif les résultats obtenus lorsqu'on utilise pour l'extraction le CMPO à une concentration de 0,01 mol/l dans le nitrophénylhexyl éther.

### Exemples 17 à 26

Dans ces exemples, on utilise le second mode de mise en oeuvre du procédé de l'invention pour extraire l'europium, le neptunium, le plutonium et l'américium à patir de solutions aqueuses ayant les mêmes compositions que celles utilisées dans les exemples 7 à 16. Dans ces exemples, on utilise le dispositif représenté sur la figure annexée.

Ce dispositif comprend une enceinte 1 séparée en deux compartiments 3 et 5 par une membrane liquide supportée 7, constituée par une membrane microporeuse en polypropylène commercialisée sous le nom CELGARD 2500 qui présente les caractéristiques suivantes :
Facteur de porosité : 0,45
Diamètre des pores : 0,04 µm
Epaisseur de la membrane : 0,025 mm.

Les pores de cette membrane sont remplis d'une phase organique constituée de nitrophénylhexyléther comprenant 0,001 ou 0,0001 M de calixarène.

Les deux compartiments 3 et 5 sont munis d'agitateurs magnétiques 9.

Le compartiment 3 contient 50 ml de la solution aquese (NaNO₃:4 mol/l, HNO₃:1 mol/l avec Eu, Np, Pu, Am) et le compartiment 5 contient 50 ml d'une solution aqueuse de réextraction constituée par une solution aqueuse à 1mol/1 d'acide méthylène diphosphonique.

On soumet les deux solutions à une agitation, et on détermine l'activité initiale de la solution du compartiment 3, puis l'activité de la solution aqueuse de réextraction du compartiment 5 par spectrométrie α liquide, et on poursuit l'opération pendant un jour. On en déduit le pourcentage de neptunium, de plutonium, d'américium et d'europium récupéré dans la solution aqueuse de réextraction après 6 et 24 h.

Les calixarènes utilisés, la perméabilité (exprimée en cm h⁻¹) de la membrane au Np et au Pu, ainsi que le %, au bout de 6 et de 24 h, d'Eu, d'Am, de Np et Pu récupérés sont donnés dans le tableau 3.

Au vu de ce tableau, on constate que la membrane liquide supportée même contenant une faible concentration en calixarènes (10⁻³ - 10⁻⁴M) est très efficace pour transporter Am et Pu dans la solution aqueuse de réextration (beaucoup plus efficace que le CMPO 10⁻²M).

**TABLEAU 1**

| COMPOSE | m | n | R¹ | R² | R³ | R⁴ |
|---|---|---|---|---|---|---|
| 1 | 0 | 4 | C₁₂H₂₅ | - | C₆H₅ | C₆H₅ |
| 2 | 0 | 4 | C₁₀H₂₁ | - | C₆H₅ | C₆H₅ |
| 3 | 0 | 4 | C₁₄H₂₉ | - | C₆H₅ | C₆H₅ |
| 4 | 0 | 4 | C₁₆H₃₃ | - | C₆H₅ | C₆H₅ |
| 5 | 0 | 4 | C₁₈H₃₇ | - | C₆H₅ | C₆H₅ |
| 6 | 1 | 2 | C₁₀H₂₁ | CH₃ | C₆H₅ | C₆H₅ |
| 7 | 1 | 2 | C₁₈H₃₇ | CH₃ | C₆H₅ | C₆H₅ |
| 8 | 0 | 4 | C₅H₁₁ | - | C₆H₅ | C₆H₅ |
| 9 | 1 | 2 | C₆H₁₇ | CH₃ | C₆H₅ | C₆H₅ |
| 10 | 0 | 4 | 2Ethyl Hexyl | - | C₆H₅ | C₆H₅ |

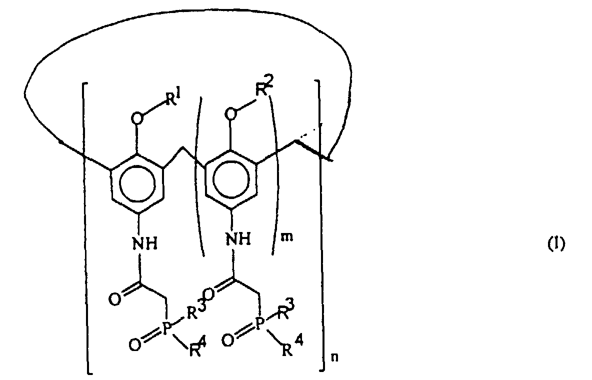

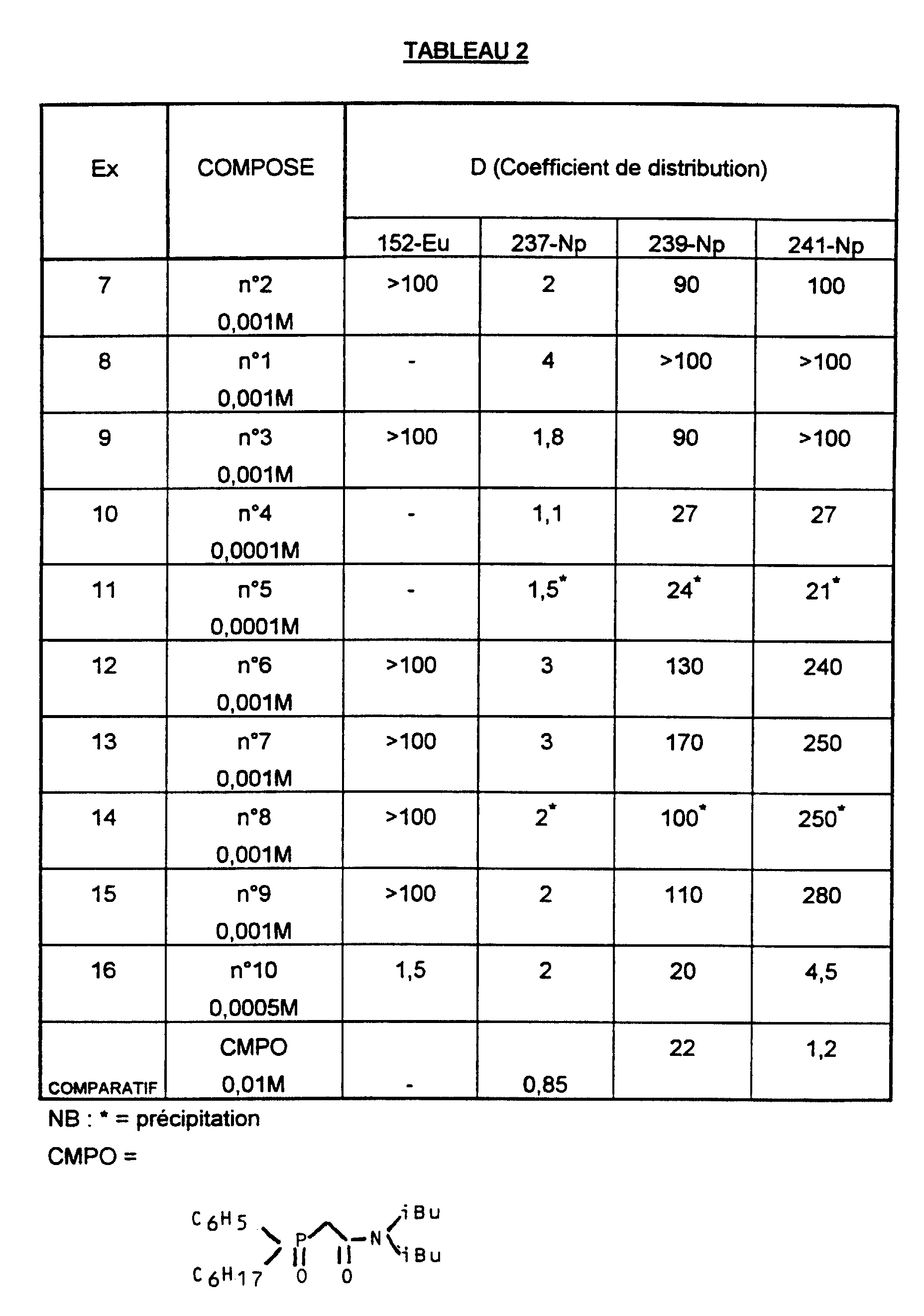

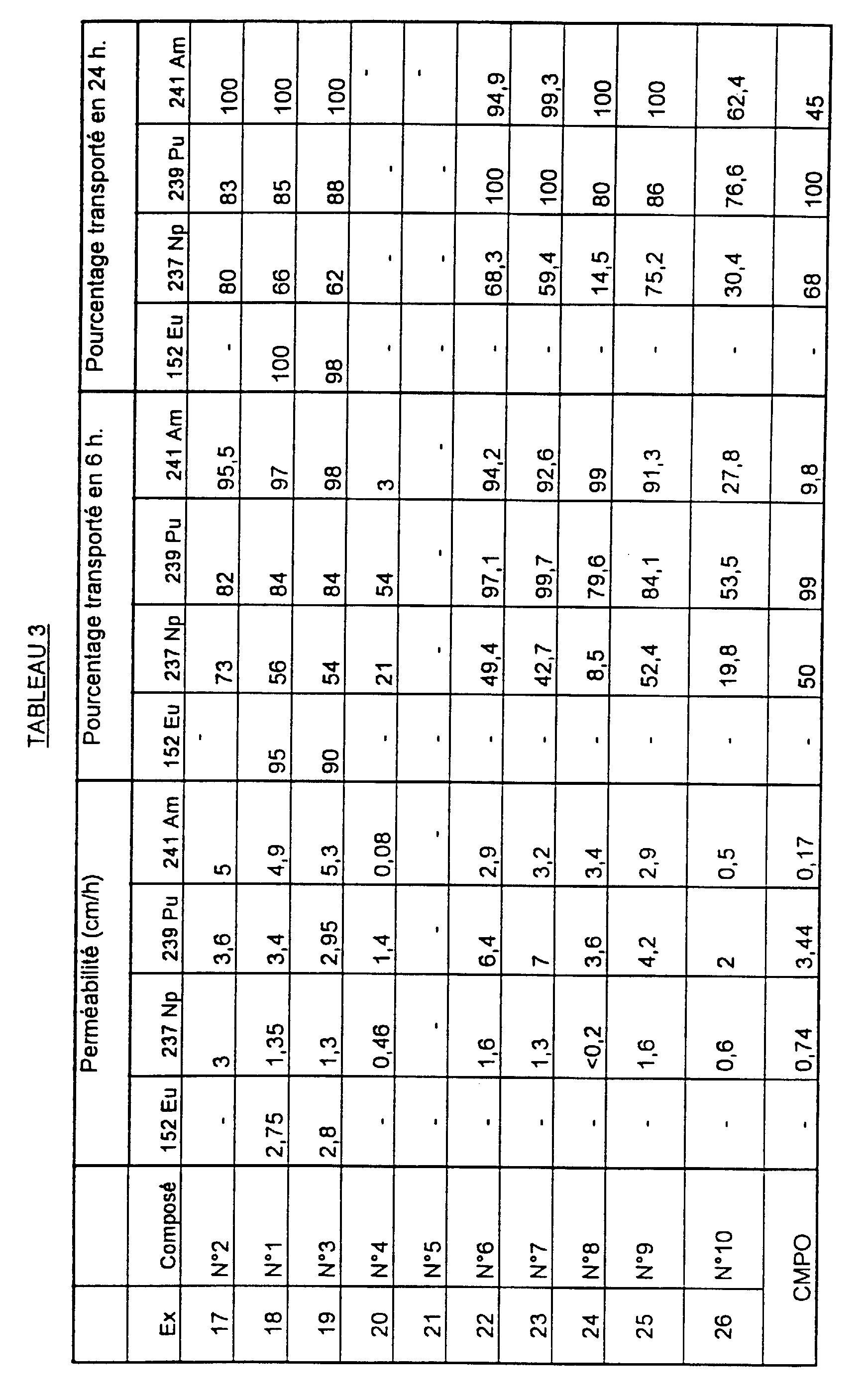

## Revendications

1. Calixarène de formule : 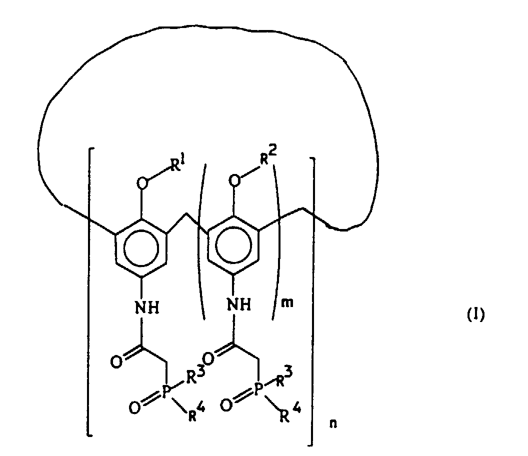 dans laquelle m est égal à 0 ou 1,
- n est un nombre entier allant de 2 à 8, avec 4≤ (m + 1) x n ≤ 8
- R¹ et R² qui peuvent être identiques ou différents sont des groupes alkyle ou o-nitrophénoxyalkyle et,
- R³ et R⁴ qui peuvent être identiques ou différents, sont des groupes alkyle ou aryle.

2. Calixarène selon la revendication 1, caractérisé en ce que m est égal à 0.

3. Calixarène selon la revendication 2, caractérisé en ce que n est égal à 4 et en ce que R³ et R⁴ représentent le groupe phényle.

4. Calixarène selon la revendication 3, caractérisé en ce que R¹ représente un groupe alkyle choisi parmi les groupes décyle, dodécyle, tétradécyle, hexadécyle ,octadécyle, pentyle et 2-éthylhexyle.

5. Calixarène selon la revendication 1, caractérisé en ce que m est égal à 1.

6. Calixarène selon la revendication 5, caractérisé en ce que n est égal à 2, R¹ représente le groupe octyle, décyle ou octadécyle, R² représente le groupe méthyle, et R³ et R⁴ représentent le groupe phényle.

7. Procédé de préparation d'un calixarène répondant à la formule (I) de la revendication 1, caractérisé en ce qu'il comprend les étapes suivantes :
a) nitration d'un O-alkyl calixarène de formule : 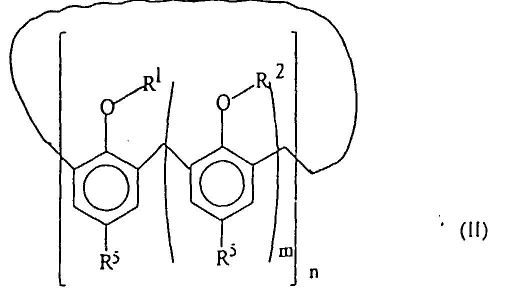 dans laquelle R¹, R², m et n ont les significations données dans la revendicattion 1 et R⁵ est un atome d'hydrogène ou un groupe tertbutyle, pour obtenir un dérivé nitré de formule : 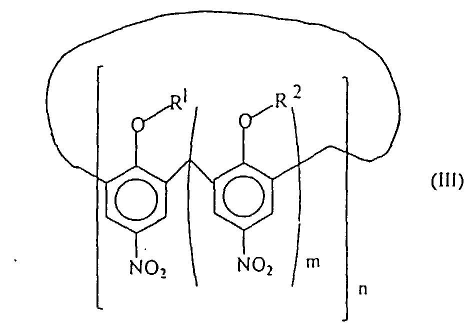
b) convertir le dérivé nitré de formule (III) en dérivé aminé de formule : 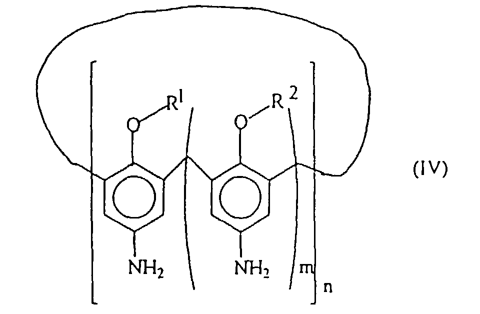 par hydrogénation catalytique,
c) faire réagir le dérivé aminé de formule (IV) avec un phosphinoxydo acétate de formule: 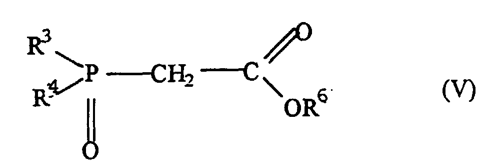 dans laquelle R³ et R⁴ ont les significations données dans la revendication 1 et R⁶ représente le groupe p-nitrophényle ou 2,4-dinitrophényle.

8. Procédé pour séparer au moins un métal choisi parmi les lanthanides et les actinides présent(s) dans une 1ère solution aqueuse, caractérisé en ce qu'il consiste à mettre en contact cette 1ère solution aqueuse avec une phase immiscible comprenant un calixarène selon l'une quelconque des revendications 1 à 6, et à réextraire dans une deuxième solution aqueuse contenant un complexant des métaux extraits, le ou les métaux transférés dans un premier temps dans la phase immiscible.

9. Procédé selon la revendication 8 caractérisé en ce que la phase immiscible est une solution du calixarène dans un solvant organique.

10. Procédé selon la revendication 9, caractérisé en ce que le solvant organique est un nitrophénylalkyléther.

11. Procédé selon l'une quelconque des revendications 9 et 10, caractérisé en ce que la phase immiscible est immobilisée dans une membrane microporeuse.

12. Procédé selon la revendication 11, caractérisée en ce que la membrane microporeuse est en polypropylène.

13. Procédé selon l'une quelconque des revendications 11 et 12, caractérisé en ce que l'une des faces de la membrane est en contact avec la première solution aqueuse et l'autre face de la membrane est en contact avec la 2ème solution aqueuse de réextraction.

14. Procédé selon l'une quelconque des revendication 8 à 13, caractérisé en ce que le complexant est l'acide méthylène diphosphonique.

## Patentansprüche

1. Calixaren der Formel: 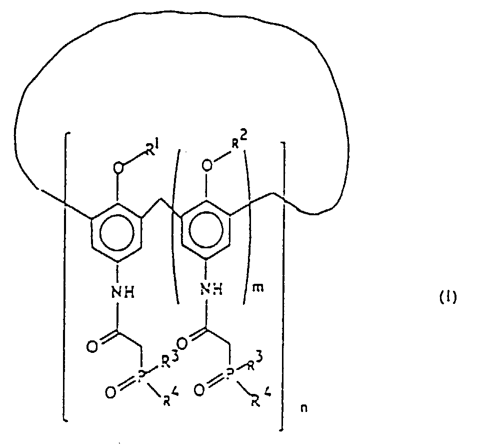 worin
- m gleich 0 oder 1 ist,
- n eine ganze Zahl ist, die von 2 bis 8 geht, mit 4 ≤ (m+1) x n ≤ 8,
- R¹ und R², die gleich oder verschieden sein können, Alkyl- oder o-Nitrophenoxyalkylgruppen sind und
- R³ und R⁴, die gleich oder verschieden sein können, Alkyl- oder Arylgruppen sind.

2. Calixaren nach Anspruch 1, dadurch gekennzeichnet, daß m gleich 0 ist.

3. Calixaren nach Anspruch 2, dadurch gekennzeichnet, daß n gleich 4 ist und daß R³ und R⁴ die Phenylgruppe darstellen.

4. Calixaren nach Anspruch 3, dadurch gekennzeichnet, daß R¹ eine Alkylgruppe darstellt, die unter der Decyl-, Dodecyl-, Tetradecyl-, Hexadecyl-, Octadecyl-, Pentyl- und 2-Ethylhexylgruppe gewählt ist.

5. Calixaren nach Anspruch 1, dadurch gekennzeichnet, daß m gleich 1 ist.

6. Calixaren nach Anspruch 5, dadurch gekennzeichnet, daß n gleich 2 ist, R¹ die Octyl-, Decyl- oder Octadecylgruppe darstellt, R² die Methylgruppe darstellt und R³ und R⁴ die Phenylgruppe darstellen.

7. Verfahren zur Herstellung eines Calixarens, das der Formel (I) von Anspruch 1 entspricht, dadurch gekennzeichnet, daß es die folgenden Schritte umfaßt:
a) Nitrierung eines O-Alkyl-Calixarens der Formel: 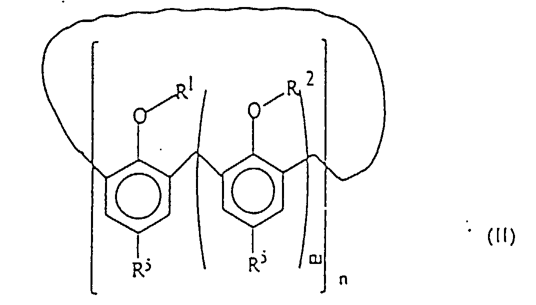 worin R¹, R², m und n die in Anspruch 1 gegebenen Bedeutungen haben und R⁵ ein Wasserstoffatom oder eine tertiäre Butylgruppe ist, um ein Nitroderivat der Formel: 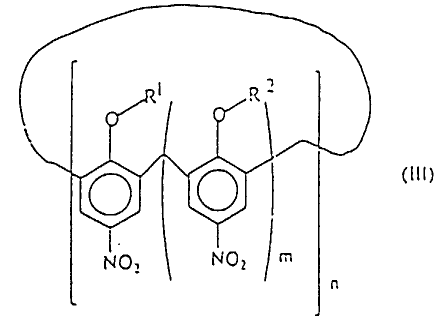 zu erhalten,
b) das Nitroderivat der Formel (III) durch katalytische Hydrierung in ein Aminoderivat der Formel: 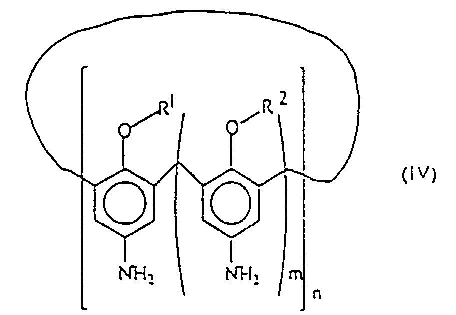 umzuwandeln,
c) das Aminoderivat der Formel (IV) mit einem Phosphinoxido-acetat der Formel: 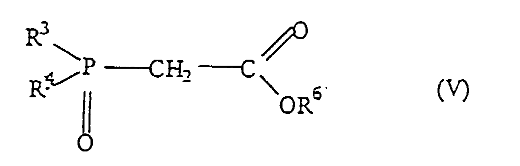 reagieren zu lassen, worin R³ und R⁴ die in Anspruch 1 gegebenen Bedeutungen haben und R⁶ die p-Nitrophenyl- oder die 2,4-Dinitrophenylgruppe darstellt.

8. Verfahren zur Abtrennung mindestens eines unter den Lanthaniden und den Actiniden gewählten, in einer ersten wäßrigen Lösung vorhandenen Metalls, dadurch gekennzeichnet, daß es darin besteht, diese erste wäßrige Lösung in Kontakt mit einer mit ihr nicht mischbaren Phase zu bringen, die ein Calixaren nach einem der Ansprüche 1 bis 6 umfaßt, und das oder die Metalle, die zu einer erstem Zeitpunkt in die nicht mischbare Phase überführt wurden, in eine zweite wäßrige Lösung, die einen Komplexbildner für die extrahierten Metalle enthält, zu reextrahieren.

9. Verfahren nach Anspruch 8, dadurch gekennzeichnet, daß die nicht mischbare Phase eine Lösung des Calixarens in einem organischen Lösungsmittel ist.

10. Verfahren nach Anspruch 9, dadurch gekennzeichnet, daß das organische Lösungsmittel ein Nitrophenylalkylether ist.

11. Verfahren nach einem der Ansprüche 9 und 10, dadurch gekennzeichnet, daß die nicht mischbare Phase in einer mikroporösen Membran immobilisiert ist.

12. Verfahren nach Anspruch 11, dadurch gekennzeichnet, daß die mikroporöse Membran aus Polypropylen ist.

13. Verfahren nach einem der Ansprüche 11 und 12, dadurch gekennzeichnet, daß die eine Seite der Membran in Kontakt mit der ersten wäßrigen Lösung ist und die andere Seite der Membran in Kontakt mit der zweiten, der Reextraktion dienenden wäßrigen Lösung ist.

14. Verfahren nach einem der Ansprüche 8 bis 13, dadurch gekennzeichnet, daß das Komplexierungsmittel die Methylendiphosphonsäure ist.

## Claims

1. Calixarene of formula: 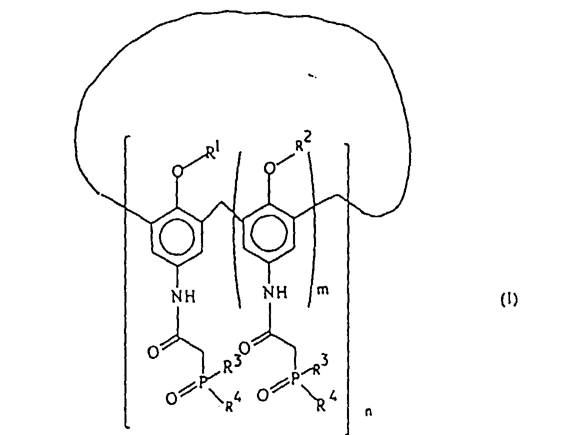 in which
m is equal to 0 or 1,
n is an integer from 2 to 8 with 4 ≤ (m + 1) x n ≤ 8,
R¹ and R², which can be the same or different, are alkyl or o-nitrophenoxyalkyl groups and
R³ and R⁴, which can be the same or different, are alkyl or aryl groups.

2. Calixarene according to claim 1, characterized in that m is equal to 0.

3. Calixarene according to claim 2, characterized in that n is equal to 4 and in that R³ and R⁴ represent the phenyl group.

4. Calixarene according to claim 3, characterized in that R¹ represents an alkyl group chosen from among decyl, dodecyl, tetradecyl, hexadecyl, octadecyl, pentyl and 2-ethylhexyl groups.

5. Calixarene according to claim 1, characterized in that n is equal to 1.

6. Calixarene according to claim 5, characterized in that n is equal to 2, R¹ represents the octyl, decyl or octadecyl group, R² represents the methyl group and R³ and R⁴ represent the phenyl group.

7. Process for the preparation of a calixarene according to formula (I) of claim 1, characterized in that it comprises the following stages:
a) nitration of an O-alkyl calixarene of formula: 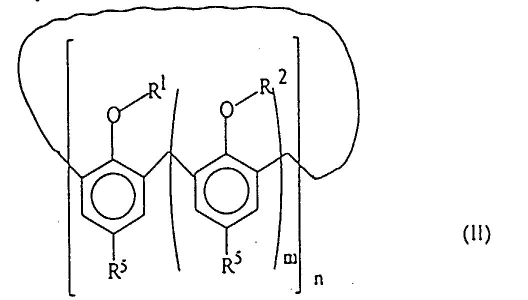 in which R¹, R², m and n have the meanings given in claim 1 and R⁵ is a hydrogen atom or a tert. butyl group, to obtain a nitro-derivative of formula: 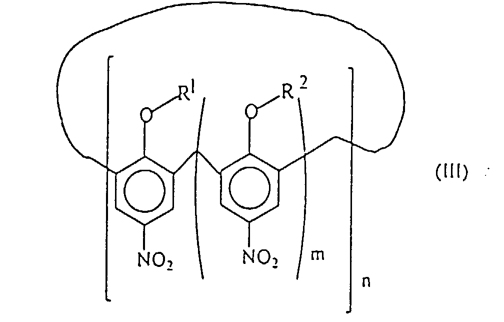
b) conversion of the nitro derivative of formula (III) into an amino derivative of formula: 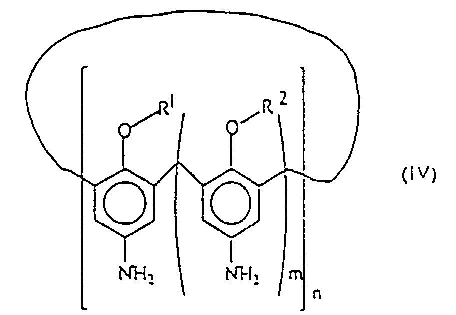 by catalytic hydrogenation,
c) reacting the amino derivative of formula (IV) with phosphinoxidoacetate of formula: 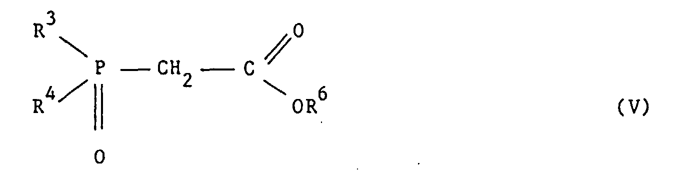 in which R³ and R⁴ have the meanings in claim 1 and R⁶ represents the p-nitrophenyl or 2,4-dinitrophenyl group.

8. Process for the separation of at least one metal chosen from among the lanthanides and actinides present in a first aqueous solution, characterized in that it consists of contacting said first aqueous solution with an immiscible phase incorporating a calixarene according to any one of the claims 1 to 6 and reextracting in a second aqueous solution containing a complexing agent of the extracted metals, the metal or metals transferred initially into the immiscible phase.

9. Process according to claim 8, characterized in that the immiscible phase is a solution of calixarene in an organic solvent.

10. Process according to claim 9, characterized in that the organic solvent is a nitrophenylalkyl ether.

11. Process according to either of the claims 9 and 10, characterized in that the immiscible phase is immobilized in a microporous membrane.

12. Process according to claim 11, characterized in that the microporous membrane is of polypropylene.

13. Process according to either of the claims 11 and 12, characterized in that one of the faces of the membrane is in contact with the first aqueous solution and the other face of the membrane is in contact with the second, aqueous reextraction solution.

14. Process according to any one of the claims 8 to 13, characterized in that the complexing agent is methylene diphosphonic acid.
